# EUROPÄISCHE PATENTSCHRIFT

(11) **EP 1 325 461 B1**
(45) Veröffentlichungstag und Bekanntmachung des Hinweises auf die Patenterteilung: **30.08.2006**
(21) Anmeldenummer: 01971710.7
(22) Anmeldetag: 14.09.2001
(51) Int. Cl.: G06K 7/00, G06K 19/07

(54) **VERFAHREN ZUR KODIERUNG VON DATENPAKETEN INSBESONDERE ZUR ÜBERTRAGUNG ÜBER EINE LUFTSCHNITTSTELLE ZU EINEM MOBILEN DATENTRÄGER**
METHOD FOR CODING DATA PACKETS PARTICULARLY FOR TRANSMITTING OVER AN AIR INTERFACE
PROCEDE DE CODAGE DE PAQUETS DE DONNEES, ET EN PARTICULIER DE TRANSMISSION PAR UNE INTERFACE AERIENNE

(30) Priorität: 27.09.2000 DE 10049162
(43) Veröffentlichungstag der Anmeldung: 09.07.2003
(73) Patentinhaber: SIEMENS AKTIENGESELLSCHAFT, 80333 München (DE)
(72) Erfinder: CUYLEN, Michael, 90513 Zirndorf (DE)
(86) Internationale Anmeldenummer: PCT/DE2001/003532
(87) Internationale Veröffentlichungsnummer: WO 2002/027642

(56) Entgegenhaltungen:
- US-A- 5 712 630

## Beschreibung

Die Erfindung bezieht sich auf ein Verfahren zum berührungslosen Austausch von Datenpaketen zwischen einem Schreib-/Lesegerät und mindestens einem mobilen Datenträger gemäß dem Oberbegriff des Anspruchs 1. Der Erfindung bezieht sich auf einen mobilen Datenträger und ein Schreib-/Lesegerät zur Durchführung des Verfahrens sowie auf ein Identifikationssystem mit einem solchen Schreib-/Lesegerät und mindestens einem solchen mobilen Datenträger.

Kontaktlose Identifikationssysteme arbeiten auf Basis von berührungslosen Übertragungstechniken. Diese können beruhen auf elektromagnetische Weise, mittels Licht, Infrarot oder Ultraschall. Systeme dieser Art werden beispielsweise zur Identifikation von Personen oder von bewegten Gütern wie z.B. von Transportmitteln eingesetzt. Die notwendigen Daten werden dazu von einem Sende-/Empfangsgerät über eine berührungslose Datenübertragungsstrecke übertragen, wie z.B. über eine Luftschnittstelle zu einem Datenträger und zurück. Dabei gestattet die berührungslose Identifikationstechnik auch die Erfassung der Daten z.B. während einer Vorbeibewegung des Datenträgers, ohne dass dieser in ein Schreib-/Lesegerät eingeschoben oder durchgezogen werden muss. Datenträger dieser Art werden beispielsweise als Fahrkarten mit einem elektronisch nachladbaren Guthaben verwendet, bei denen der entsprechende Betrag bei Benutzung des Verkehrsmittels automatisch abgebucht wird.

Damit die Datenträger zeitlich unbegrenzt eingesetzt werden können, wird bei diesen auf die Integration von chemischen Energiespeichern, wie z.B. Batterien, verzichtet. Die notwendige elektrische Energie der Datenträger wird daher extern, d.h. einem vom Sende-/Empfangsgerät stammenden Energieträger, z.B. einem elektrischen oder magnetischen Feld, kontaktlos entnommen. Zur Kommunikation des Sende-/Empfangsgerätes mit derartigen Datenträgern sind daher geeignete Übertragungs-und Kodierungsverfahren notwendig. Zum einen sind zur Übertragung von Daten in der Regel nur bestimmte Frequenzbänder freigegeben, wie z.B. die ISM-Frequenzbänder (Industrial, Scientific & Medical) für industrielle, wissenschaftliche und medizinische Anwendungen. Mögliche nationale Funkvorschriften können u.a. die einzuhaltenden Modulationsbandbreiten sowie die Feldstärken festlegen. Zum anderen müssen die Übertragungs- und Kodierungsverfahren auch eine energetische Versorgung der Elektronik auf dem Datenträger sicherstellen.

Solche Verfahren sind z.B. nach der Norm ISO/IEC 15693 Part 2 "Air Interface and Initialization" bekannt. Verfahren dieser Art erlauben eine durchgehende Energieversorgung der Datenträgerelektronik, die von der Energie der angelegten Trägerfrequenz des Sende-/Empfangsgerätes stammt. Dabei wird die Trägerfrequenz zur Modulation der zu sendenden Daten nur für ein maximales Zeitintervall ausgeschaltet. Innerhalb dieses Zeitintervalls muss ein zuvor durch das elektrische oder magnetische Feld aufgeladener Energiespeicher die Energieversorgung der Datenträgerelektronik überbrücken können. Als temporärer Energiespeicher kann z.B. ein Schwingkreis oder ein Kondensator auf dem Datenträger verwendet werden. Dabei erfolgt eine Kodierung der Daten durch Wegschalten des Trägers an festgelegten Positionen innerhalb eines zyklischen Zeitrasters. Die Norm legt weiterhin unter Berücksichtigung des obengenannten maximalen Zeitintervalls die Feldstärkegrenzwerte für die durch Modulation hervorgerufenen Seitenbänder bei einer bestimmten Trägerfrequenz fest. Für die Höhe der Seitenbandmodulation ist zum einen das Zeitverhältnis von eingeschalteter zu ausgeschalteter Trägerfrequenz maßgeblich. Daneben tragen weiterhin aufeinanderfolgende Wechsel von eingeschalteter zu ausgeschalteter Trägerfrequenz zu einer deutlichen Erhöhung der Seitenbandmodulation bei. Die Notwendigkeit, die in der Norm festgelegten Seitenbandgrenzen einzuhalten, führt zu einer maximal möglichen Datenrate. Diese beträgt z.B. für ein ISM-Frequenzband gemäß Norm 15693 Part 2, Seite 6, 26,48 Kbit/s.

Nachteilig daran ist, dass 8 Wechsel von eingeschalteter zu ausgeschalteter Trägerfrequenz für die Übertragung einer Folge von 4 Logikpegeln benötigt werden, die zu einer deutlichen Erhöhung der Seitenbandmodulation führen.

Aus dem US-Patent US 5,712,630 ist ein Identifikationssystem mit einem Kodierverfahren bekannt, welches eine Übertragungseffektivität von 75% erreicht. Dadurch wird eine Erhöhung der Übertragungsreichweite erzielt. Bei der Kodierung werden die Logikpegel "H" und "L" als Elemente der Übertragungsdaten explizit in Termen verschiedener 4-stelliger Binärfolgen mit drei "1"-Werten und einem "0"-Wert umgesetzt. Das Verhältnis aus den drei "1"-Werte und dem einen "0"-Wert entspricht der 75%-Übertragungseffektivität. Das Kodierverfahren ist dabei so ausgebildet, dass keine zwei "0"-Werte aufeinander folgen. Zur Datenübertragung wird dabei eine Trägerfrequenz in einem Zeitsegment bei einem "1"-Wert eingeschaltet und bei einem "0"-Wert ausgeschaltet.

Der Erfindung liegt somit die Aufgabe zu Grunde, ein neues Übertragungsverfahren vorzuschlagen, welches eine geringere Seitenbandmodulation zur Folge hat.

Diese Aufgaben werden gelöst mit dem in den Ansprüchen angegebenen Verfahren, einem darauf basierenden Identifikationssystem und darauf basierenden Vorrichtungen. Vorteilhafte weitere Ausgestaltungen des Verfahrens und der Vorrichtungen sind in den Unteransprüchen enthalten.

Die Erfindung wird an Hand der nachfolgenden Figuren näher erläutert. Dabei zeigt
- FIG. 1: ein Beispiel für ein Identifikationssystem, welches ein Schreib-/Lesegerät und einen Datenträger mit je einer Kodiereinrichtung zur Durchführung des erfindungsgemäßen Verfahrens zum berührungslosen Austausch von Datenpaketen aufweist,
- FIG. 2a-2c: Beispiele für den Aufbau eines Datenpaketes, welches durch das erfindungsgemäße Verfahren zu kodieren ist,
- FIG. 3: ein Beispiel, welches eine Ausgestaltung des erfindungsgemäßen Verfahrens zur Kodierung eines Datenpaketes beschreibt,
- FIG. 4a-4c: ein Beispiel, welches eine weitere Ausgestaltung des erfindungsgemäßen Verfahrens zur Kodierung eines Datenpaketes beschreibt, und
- FIG. 5a-5c: Beispiele der erfindungsgemäßen Kodierung eines Datenbytes, welches gemäß dem Beispiel in FIG. 4a und FIG. 4b in einen Datenzeitblock mit einer unterschiedlichen Anzahl von Zeitsegmenten kodiert wird.

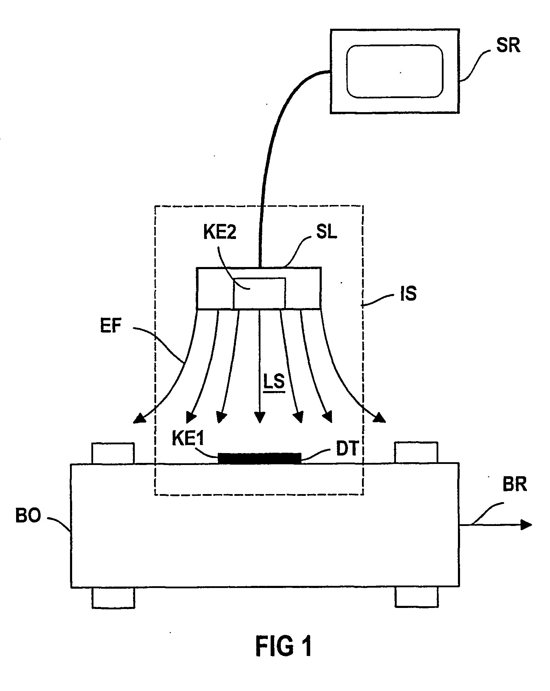

FIG. 1 zeigt beispielhaft ein Identifikationssystem IS, welches ein Schreib-/Lesegerät SL und einen Datenträger DT mit je einer Kodiereinrichtung KE1, KE2 zur Durchführung des erfindungsgemäßen Verfahrens aufweist. Dabei werden die Datenpakete DP über eine berührungslose Datenübertragungsstrecke LS, wie z.B. eine Luftschnittstelle, übertragen. Im oberen Teil der Figur 1 ist ein beispielhafter Steuerrechner SR dargestellt, der mit einem Schreib/Lesegerät SL über eine Schnittstelle in Verbindung steht. Über diese werden die Daten zwischen Steuerrechner SR und Schreib-/Lesegerät SL z.B. zur Datenerfassung ausgetauscht. Im unteren Teil der FIG. 1 ist ein Objekt BO dargestellt, wie z.B. ein Transportmittel, welches sich in einer Bewegungsrichtung BR relativ zum Schreib-/Lesegerät SL bewegt. Seitlich am bewegten Objekt BO ist ein Datenträger DT angebracht. Schreib-/Lesegerät SL und Datenträger DT sind über die beispielhafte Luftschnittstelle LS verbunden, über welche die Versorgung des Datenträgers DT mit Energie sowie die Datenübertragung erfolgt.

Die Übertragung der Daten kann dabei zur Identifikation des beispielhaften Transportmittels BO durch das Schreib-/Lesegerät SL dienen. Eine weitere Möglichkeit besteht darin, dass dem Transportmittel BO beispielsweise neue Auftragsdaten für die Zustellung eines Transportgutes übermittelt werden. Zur Veranschaulichung des Energieflusses von Schreib-/Lesegerät SL zu Datenträger DT sind weiterhin Energieflusslinien EF eingezeichnet. Die Träger der notwendigen Energie können dabei beispielsweise elektrische oder magnetische Felder, oder auch vom Schreib-/Lesegerät SL ausgesendetes Infrarot-Licht, sichtbares oder ultraviolettes Licht sein. Weitere mögliche Energieträger sind vom Schreib-/Lesegerät SL stammende Mikrowellen, Ultraschallwellen oder Funkwellen.

Zur Kommunikation eines Schreib-/Lesegerätes SL mit einem Datenträger DT sind Steuerbefehle ST notwendig, um die verschiedenen Betriebsarten zur Datenübertragung, wie z.B. "Daten schreiben" oder "Daten lesen", einzustellen. Die Steuerbefehle ST und die zu übertragenden Daten überträgt der mit dem Schreib-/Lesegerät SL verbundene beispielhafte Steuerrechner SR in Datenpaketen DP. Diese beinhalten die notwendigen Steuerbefehle ST in Form von Steuerkommandos S und die zu übertragenden Daten in Form von Datenbytes B. Die vom Schreib-/Lesegerät SL empfangenen Daten werden gleichfalls in Datenpaketen DP an den Steuerrechner SR übertragen. Beispielsweise wird als kleinste Dateneinheit für Steuerkommandos S und Datenbytes B ein acht Bits umfassendes Byte verwendet.

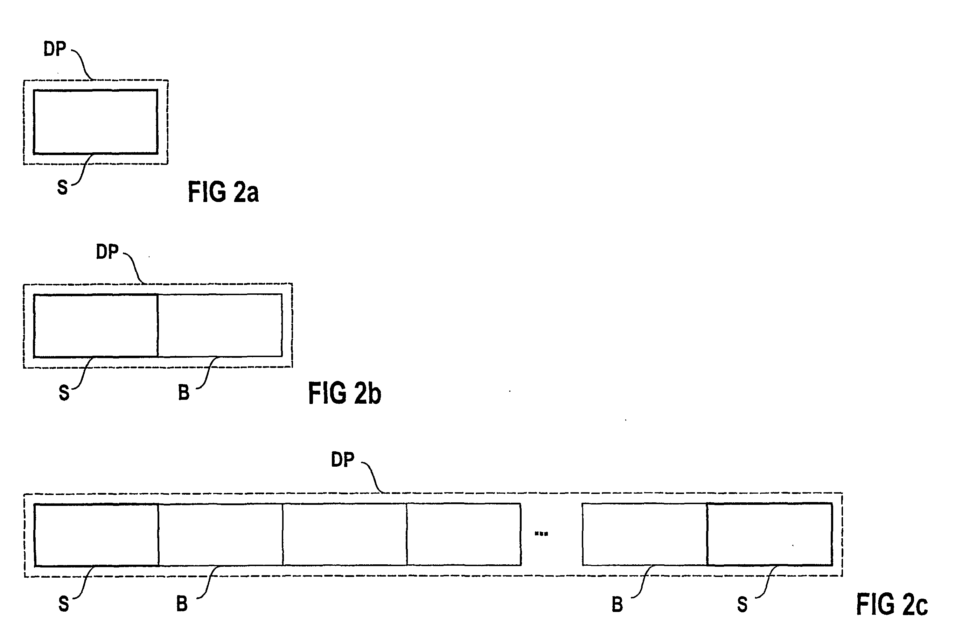

Die FIG. 2a bis FIG. 2c zeigen Beispiele für den Aufbau eines Datenpaketes DP zur Kodierung mittels des erfindungsgemäßen Verfahrens. Dabei ist in FIG. 2a ein Datenpaket DP zu sehen, das nur aus einem einzigen Steuerkommando S besteht. Mögliche Inhalte eines Steuerkommandos S können z.B. die obengenannten Steuerbefehle ST wie "Schreiben", "Lesen" oder auch die Befehle "Übertragung beenden" sein.

FIG. 2b zeigt ein Datenpaket DP, das beispielhaft aus einem Steuerkommando S und einem Datenbyte B besteht. Das Datenbyte B legt in diesem Beispiel die Anzahl der zu sendenden Datenbytes B fest.

FIG. 2c zeigt einen möglichen Aufbau eines Datenpaketes DP, beginnend mit einem Steuerbefehl ST "Start" eines Steuerkommando S und einem folgenden Datenbyte B. Das Ende der Übertragung eines Datenpaketes DP kann dabei mit einem entsprechenden Steuerbefehl ST "Stop" am Schluss des Datenpaketes DP gekennzeichnet sein.

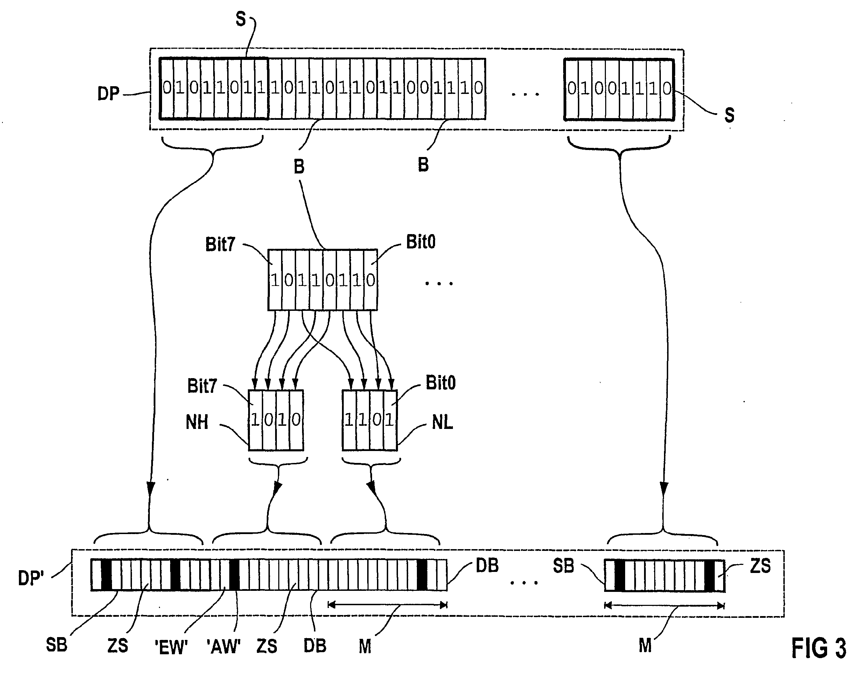

FIG. 3 beschreibt als Beispiel eine Ausgestaltung des erfindungsgemäßen Verfahrens zur Kodierung eines Datenpaketes DP. Dieses weist dabei mindestens ein Steuerkommando S und mindestens ein Datenbyte B auf. Erfindungsgemäß wird zur Kodierung das Datenpaket DP in Sequenzen von Steuer- und/oder Datenzeitblöcken SB, DB aufgeteilt, die dann jeweils in eine vorgegebene Anzahl M von Zeitsegmenten ZS aufgeteilt werden. Dabei können die Zeitsegmente ZS einen Einwert EW oder einen Auswert AW annehmen. Weiterhin wird erfindungsgemäß in die Zeitsegmente ZS eines Steuerzeitblockes SB zumindest ein Steuerkommando S und in die Zeitsegmente ZS von zwei aufeinanderfolgenden Datenzeitblöcken DB je ein Datenbyte B kodiert. Erfindungsgemäß erfolgt die Kodierung so, dass jedem Zeitsegment ZS mit einem Auswert AW mindestens ein Zeitsegment ZS mit einem Einwert EW folgt.

Das Beispiel der FIG. 3 zeigt weiterhin ein Datenbyte B, welches beispielhaft den Wert 10110110 aufweist. Dieses wird erfindungsgemäß vor der Kodierung in die Zeitsegmente ZS von zwei aufeinanderfolgenden Datenzeitblöcken DB in zwei Halbbytes NH, NL mit den Werten 1010 und 1101 geteilt. Im Beispiel wird bei beiden Steuer- und Datenzeitblöcke SB, DB als Anzahl M der Zeitsegmente ZS vorteilhaft der Wert 11 gewählt.

Die Wahl einer gleichen Anzahl M von Zeitsegmenten ZS hat den Vorteil, dass z.B. der Aufbau eines Steuerwerkes einer Empfangseinrichtung vereinfacht werden kann.

Wie oben erläutert, erfolgt die Kodierung so, dass jedem Zeitsegment ZS mit einem Auswert AW mindestens ein Zeitsegment ZS mit einem Einwert EW folgt. Dabei wird für ein Zeitsegment ZS mit einem Auswert AW der Energieträger für die Energiezufuhr abgeschaltet. In entsprechender Weise schaltet ein Einwert EW den Energieträger wieder zu.

Die zuvor erläuterte Kodierung gewährleistet vorteilhaft, dass nur für ein maximales Zeitintervall von der Dauer eines Zeitsegments ZS der Energieträger abgeschaltet wird. Damit ist eine durchgehende energetische Versorgung der Datenträgerelektronik gewährleistet.

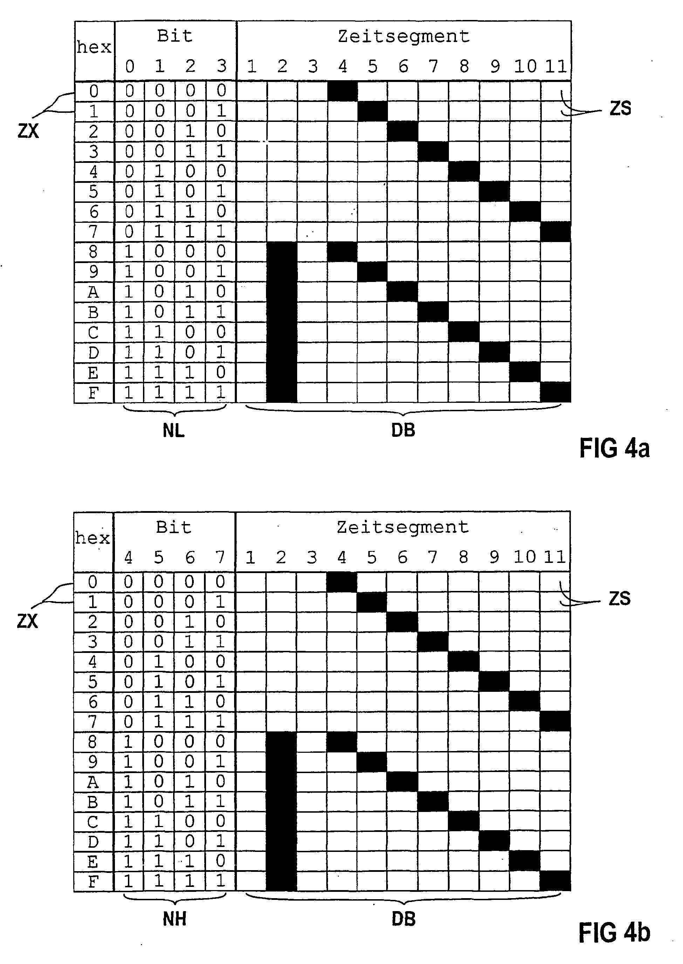

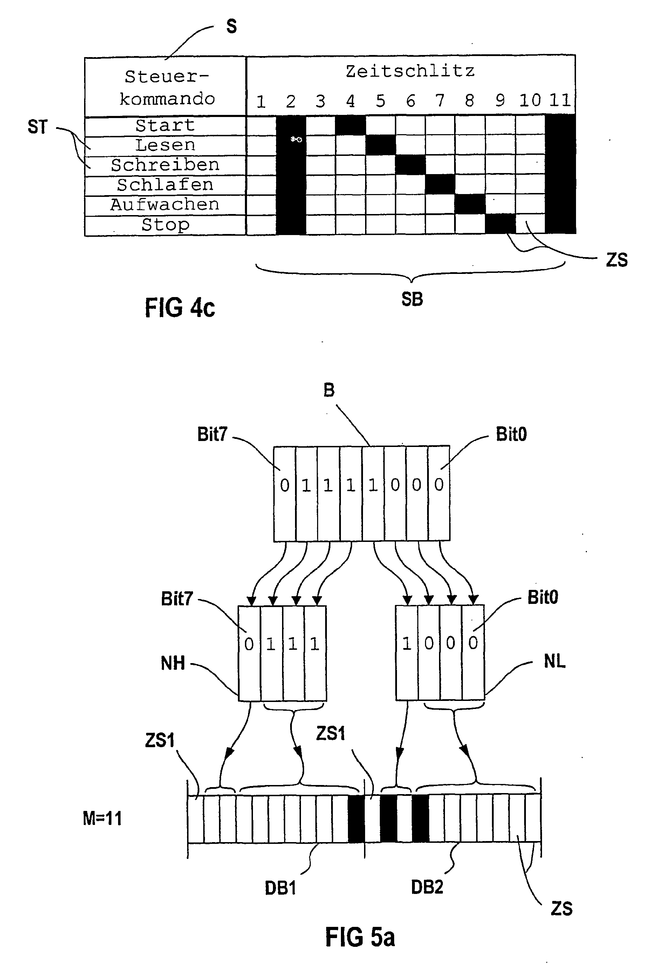

Am Beispiel der FIG. 4a bis FIG. 4c wird gemäß dem erfindungsgemäßen Verfahren die Kodierung eines Datenpaketes DP näher erläutert. FIG. 4a und FIG. 4b beschreiben die Kodierung der Bits BITO-BIT7 zweier Halbbytes NH, NL in zwei Datenzeitblöcke DB. FIG. 4c zeigt eine mögliche Form der Kodierung eines Steuerkommandos S in einen Steuerzeitblock SB. Dabei wurde zum Zwecke einer übersichtlichen Erläuterung wie in FIG. 3 die gleiche Anzahl M der Zeitsegmente ZS gewählt.

In FIG. 4a und FIG. 4b wird nun erfindungsgemäß eine vorgegebene erste Zahl N der Bits BITO-BIT7 eines Halbbytes NH, NL ausgewählt. Die ausgewählten Bits BITO-BIT7 werden anschließend in eine zweite Anzahl P von ausgewählten Zeitsegmenten ZS kodiert. Die Anzahl P der ausgewählten Zeitsegmente ZS weist dabei einen Wert auf, welcher der mit der Basis 2 potenzierten Anzahl N der Bits BITO-BIT7 eines Halbbytes NH, NL entspricht. Weiterhin wird für die Zahl N der Wert drei gewählt. Gemäß der Erfindung folgen die ausgewählten Zeitsegmente ZS aufeinander, wobei diese mit einem Einwert EW vorbelegt werden. Der jeweilige digitale Wert der drei ausgewählten Bits BITO-BIT7 eines Halbbytes NH, NL wird dann als Auswert AW in eines der ausgewählten Zeitsegmente ZS gemäß der Erfindung kodiert. Bei dem erfindungsgemäßen Verfahren wird bei der Kodierung darüber hinaus berücksichtigt, dass innerhalb einer Sequenz von Datenzeitblöcken DB nur Folgen von Zeitsegmenten ZS auftreten, die eine Kette von maximal drei Ein- und Auswerten EA, AW bilden.

Für das Beispiel von FIG. 4a bedeutet dies, dass die drei Bit BIT1-Bit3 des Halbbytes NL jeweils acht aufeinanderfolgenden Zeitsegmenten ZS zugeordnet werden. In FIG. 4b werden gleichfalls die Bits BIT 5-BIT 7 des Halbbytes NH acht Zeitsegmenten ZS zugeordnet, die beispielhaft für FIG. 4a und FIG. 4b mit dem vierten Zeitsegment beginnen. Dies entspricht dem dargestellten Zahlenbereich ZX von 0 bis 7. Der Zahlenbereich ZX beschreibt dabei in hexadezimaler Schreibweise die möglichen 16 Zahlenwerte eines Halbbytes NH, NL von 0 bis F.

Der verbleibende Zahlenbereich ZX von 8 bis F des Halbbytes NH, NL wird durch das verbleibende Bit BIT4 und Bit BIT7 kodiert. Dabei wird dem binären Wert der obengenannten Bits BIT 4, BIT 7 entsprechend eine Kette von zwei Zeitsegmenten ZS im jeweiligen Datenzeitblock DB zugeordnet. Die Kette kann dabei beispielsweise aus Zeitsegmenten ZS mit einem Aus- und Einwert AW, EW oder aus Zeitsegmenten ZS mit zwei Einwerten EW bestehen. Gemäß dem Beispiel von FIG. 4a und FIG. 4b erfolgt die Zuordnung beginnend mit dem zweiten Zeitsegment.

Weiterhin ist in FIG. 4c beispielhaft die Kodierung eines Steuerkommandos S gemäß der Erfindung dargestellt. Dabei werden die beispielhaften 6 Steuerbefehle ST des Steuerkommandos S so kodiert, dass einem Zeitsegment ZS mit einem Auswert AW mindestens ein Zeitsegment ZS mit einem Einwert EW folgt. Der beispielhafte Steuerzeitblock SB in FIG. 4c unterscheidet sich vom Datenzeitblock DB gemäß FIG. 4a und FIG. 4b dadurch, dass im Zahlenbereich ZX von 8 bis D zusätzlich das letzte Zeitsegment ZS11 mit einem Auswert AW belegt wird.

Der Vorteil der Kodierung gemäß FIG. 4a bis FIG. 4c liegt darin, dass bei der gewählten Anzahl M von Zeitsegmenten ZS ein Datenbyte B durch zwei Datenzeitblöcke DB übertragen werden kann. Es werden hierzu im Beispiel 22 Zeitsegmente ZS für ein Datenbyte B verwendet. Das in der Norm ISO/IEC 15693 Part 2 "Air Interface and Initialization" vorgeschlagene Verfahren benötigt dem gegenüber 32 Zeitsegmente ZS. Dies bedeutet, dass bei Verwendung des beispielhaften ISM-Frequenzbandes mit der Erfindung eine Datenrate von 38,52 Kbit/s erzielbar ist. Mit der Erfindung kann im Gegensatz zu den ursprünglichen 26,48 Kbit/s gemäß der Norm somit eine Steigerung der Datenrate von mindestens 45% erreicht werden.

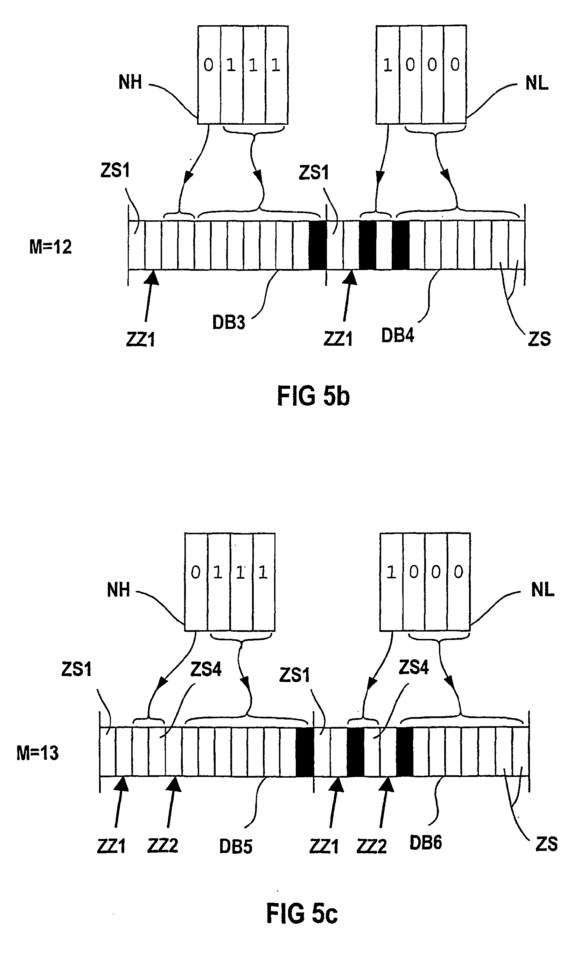

Die FIG. 5a bis FIG. 5c zeigen Beispiele der erfindungsgemäßen Kodierung eines Datenbytes B, welches gemäß dem Beispiel von FIG. 4a und FIG. 4b in einen Datenzeitblock DB1-DB6 mit einer unterschiedlichen Anzahl M von Zeitsegmenten ZS kodiert wird. Dabei verdeutlicht FIG. 5a nochmals, wie ein beispielhaftes Datenbyte B mit dem Wert von z.B. 01111000 in zwei Datenzeitblöcke DB1, DB2 kodiert wird. Dieses Beispiel zeigt, dass auch eine Folge von Zeitsegmenten ZS innerhalb der beiden Datenzeitblöcken DB1, DB2 auftreten kann, die eine Kette von 3 Ein- und Auswerten EA, AW bildet. Folgen dieser Art tragen zur Erhöhung der Seitenbandmodulation bei.

Erfindungsgemäß wird nun im Beispiel der FIG. 5b entsprechend einer weiteren Ausführung der Erfindung die Anzahl M der Zeitsegmente ZS auf 12 erhöht. Dabei wird ein zusätzliches Zeitsegment ZZ1 z.B. nach dem ersten Zeitsegment ZS1 eingefügt. Dadurch wird vorteilhaft erreicht, dass nur Folgen von Zeitsegmenten ZS innerhalb einer Sequenz von Datenzeitblöcken DB3, DB4 auftreten können, die eine Kette von höchstens zwei Ein- und Auswerten EW, AW bilden. Dies führt zu einer Absenkung der Seitenmodulation. Dabei reduziert sich die maximale Datenrate im Vergleich zum Beispiel in FIG. 5a geringfügig auf ca. 35,31 Kbit/s.

Weiterhin wird erfindungsgemäß die Anzahl M der Zeitsegmente ZS auf 13 erhöht. Dabei wird wiederum ein zusätzliches Zeitsegment ZZ2 z.B. nach dem vierten Zeitsegment ZS4 eingefügt. Dadurch wird vorteilhaft erreicht, dass innerhalb einer Sequenz von Datenzeitblöcken DB5, DB6 einem Zeitsegment ZS mit einem Auswert AW mindestens zwei Zeitsegmente ZS mit einem Einwert EW folgen. Dies führt zu einer weiteren Absenkung der Seitenmodulation. Dabei reduziert sich die maximale Datenrate im Vergleich zu den Beispielen in FIG. 5a und FIG. 5b geringfügig weiter auf ca. 32,59 Kbit/s.

## Patentansprüche

1. Verfahren zum berührungslosen Austausch von Datenpaketen (DP) zwischen einem Schreib-/Lesegerät (SL) und mindestens einem mobilen Datenträger (DT), wobei die Datenpakete (DP) in Zeitsegmente (ZS) kodiert werden, die einen Ein- oder Auswert (Z1, Z0) annehmen können, und wobei die Kodierung so erfolgt, dass jedem Zeitsegment (ZS) mit einem Auswert (AW) mindestens ein Zeitsegment (ZS) mit einem Einwert (EW) folgt, wobei
a) die Datenpakete (DP) mindestens ein Steuerkommando (S) und/oder mindestens ein Datenbyte (B) aufweisen,
b) die Datenpakete (DP) in Sequenzen von Steuer- und/oder Datenzeitblöcke (SB, DB) mit je einer vorgegebenen Anzahl (M) von Zeitsegmenten (ZS) aufgeteilt werden, wobei die Anzahl (M) für Datenzeitblöcke (DB) mindestens 11 beträgt,
c) ein Datenbyte (B) in zwei Halbbytes (NH, NL) aufgeteilt wird, welche in die Zeitsegmente (ZS) von zwei aufeinander folgenden Datenzeitblöcken (DB) kodiert werden, und/oder
d) zumindest ein Steuerkommando (S) in die Zeitsegmente (ZS) eines Steuerzeitblockes (SB) kodiert wird und
e) maximal drei Folgen von Zeitsegmenten (ZS) mit einem Ein-und Auswert (EW, AW) je Steuer- und/oder Datenzeitblock (SB, DB) auftreten.

2. Verfahren nach Anspruch 1,
**dadurch gekennzeichnet, dass**
drei Bits (BITO-BIT7) eines Halbbytes (NH, NL) ausgewählt und in acht, insbesondere aufeinanderfolgende, Zeitsegmente (ZS) kodiert werden.

3. Verfahren nach Anspruch 2,
**dadurch gekennzeichnet, dass**
die Zeitsegmente (ZS) mit einem Einwert (EW) vorbelegt werden und der jeweilige digitale Wert der drei ausgewählten Bits (BITO-BIT7) eines Halbbytes (NH, NL) als Auswert (AW) in eines der ausgewählten Zeitsegmente (ZS) kodiert wird.

4. Verfahren nach einem der vorangegangenen Ansprüche,
**dadurch gekennzeichnet, dass**
die maximale Anzahl (M) der Zeitsegmente (ZS) eines Steuer-und/oder Datenzeitblockes (SB, DB) 13 beträgt.

5. Verfahren nach Anspruch 4,
**dadurch gekennzeichnet, dass**
die Kodierung so erfolgt, dass maximal zwei Folgen von Zeitsegmenten (ZS) mit einem Ein- und Auswert (EW, AW) je Steuer-und/oder Datenzeitblock (SB, DB) auftreten.

6. Verfahren nach einem der vorangegangenen Ansprüche,
**dadurch gekennzeichnet, dass**
die Anzahl (M) der Zeitsegmente (ZS) eines Steuerzeitblocks (ZB) höchstens der Anzahl (M) der Zeitsegmente (ZS) eines Datenzeitblocks (DB) entspricht.

7. Mobiler Datenträger zum berührungslosen Austausch von Datenpaketen (DP) mit einem Schreib-/Lesegerät (SL), wobei der mobile Datenträger eine Kodiereinrichtung (KE1) zur Durchführung des Verfahrens nach einem der vorangegangenen Ansprüche aufweist.

8. Schreib-/Lesegerät zum berührungslosen Austausch von Datenpaketen (DP) mit einem mobilen Datenspeicher (DT), wobei das Schreib-/Lesegerät eine Kodiereinrichtung (KE2) zur Durchführung des Verfahrens nach einem der Ansprüche 1 bis 6 aufweist.

9. Identifikationssystem mit einem Schreib-/Lesegerät (SL) nach Anspruch 8 und mit mindestens einem mobilen Datenträger (DT) nach Anspruch 7, welche über eine berührungslose Datenübertragungsstrecke (LS) Datenpakete (DP) austauschen.

## Claims

1. Method for the contactless exchange of data packets (DP) between a read/write device (SL) and at least on mobile data medium (DT), with the data packets (DP) being coded into time segments (ZS), assuming an on-value (EW) or an off-value (AW)(Z1,Z0), with the coding being carried out such that each time segment (ZS) with an off-value (AW) is followed by at least one time segment (ZS) with an on-value (EW), with
a) the data packets (DP) comprising at least one control command (S) and/or at least one data byte (B),
b) the data packets (DP) being divided into sequences of control and/or data time blocks (SB, DB) each with predetermined number (M) of time segments (ZS), with the number (M) for data time blocks (DB) amounting to at least 11
c) a data byte (B) being divided into two nibbles (NH, NL), which are coded in the time segments (ZS) by two consecutive data time blocks (DB), and/or
d) at least one control command (S) being coded in the time segments (ZS) of a control time block (SB) and
e) a maximum of three series of time segments (ZS) with an on-value and an off-value (EW, AW) occurring for each control and/or data time block (SB, DB).

2. Method according to claim 1,
**characterised in that**
three bits (BIT0-BIT7) of a nibble (NH, NL) are selected and are coded into eight, particularly consecutive time segments (ZS).

3. Method according to claim 2,
**characterised in that**
the time segments (ZS) are pre-assigned the on-value (EW) and the respective digital value of the three selected bits (BIT0-BIT7) of a nibble (NH, NL) is coded as the off-value (AW) into one of the selected time segments (ZS).

4. Method according to one of the preceding claims,
**characterised in that**
the maximum number (M) of the time segments (ZS) of a control time blocks (SB) and the data time block (DB) is 13.

5. Method according to claim 4,
**characterised in that**
the coding is carried out so that a maximum of two sequences of time segments (ZS) occur with an on-value (EW) and off-value (AW) for each control block (SB) and/or data time block (SB, DB).

6. Method according to one of the preceding claims,
**characterised in that**
the number (M) of the time segments (ZS) of a control time block (ZB) corresponds to the highest number (M) of the time segments (ZS) of a data time block (DB).

7. Mobile data medium for the contactless exchange of data packets (DP) with a read/write device (SL), with the mobile data medium comprising a coding device (KE1) for implementing the method according to one of the preceding claims.

8. Read/write device for the contactless exchange of data packets (DP) with a mobile data memory (DT), with the read/write device comprising a coding device (KE2) for implementing the method according to one of claims 1 to 6.

9. Identification system with a read/write device (SL) according to claim 8 and with at least one mobile data medium (DT) according to claim 7, which exchange data packets (DP) across a contactless data transmission path (LS).

## Revendications

1. Procédé pour l'échange sans contact de paquets de données (DP) entre un appareil d'écriture / lecture (SL) et au moins un support de données mobile (DT), les paquets de données (DP) étant codés dans des segments temporels (ZS) qui peuvent prendre une valeur un ou une valeur zéro (Z1, Z0) et le codage s'effectuant de telle sorte que chaque segment temporel (ZS) ayant une valeur zéro (AW) est suivi d'au moins un segment temporel (ZS) ayant une valeur un (EW),
dans lequel
a) les paquets de données (DP) comportent au moins une instruction de commande (S) et/ou au moins un octet de données (B),
b) les paquets de données (DP) sont divisés en séquences de blocs temporels de commande et/ou de données (SB, DB) ayant chacun un nombre prédéterminé (M) de segments temporels (ZS), le nombre (M) pour des blocs temporels de données (DB) valant au moins 11,
c) un octet de données (B) est divisé en deux demi-octets (NH, NL) qui sont codés dans les segments temporels (ZS) de deux blocs temporels de données successifs (DB), et/ou
d) au moins une instruction de commande (S) est codée dans les segments temporels (ZS) d'un bloc temporel de commande (SB) et
e) il apparaît au maximum trois suites de segments temporels (ZS) avec une valeur un et une valeur zéro (EW, AW) par bloc temporel de commande et/ou de données (SB, DB).

2. Procédé selon la revendication 1,
**caractérisé par le fait que** trois bits (BIT0 - BIT7) d'un demi-octet (NH, NL) sont sélectionnés et sont codés dans huit segments temporels (ZS) notamment successifs.

3. Procédé selon la revendication 2,
**caractérisé par le fait que** les segments temporels (ZS) sont préalablement occupés avec une valeur un (EW) et que la valeur numérique respective des trois bits sélectionnés (BIT0 - BIT7) d'un demi-octet (NH, NL) est codée comme valeur zéro (AW) dans l'un des segments temporels sélectionnés (ZS).

4. Procédé selon l'une des revendications précédentes,
**caractérisé par le fait que** le nombre maximal (M) des segments temporels (ZS) d'un bloc temporel de commande et/ou de données (SB, DB) vaut 13.

5. Procédé selon la revendication 4,
**caractérisé par le fait que** le codage s'effectue de telle sorte qu'il apparaît au maximum deux suites de segments temporels (ZS) avec une valeur un et une valeur zéro (EW, AW) par bloc temporel de commande et/ou de données (SB, DB).

6. Procédé selon l'une des revendications précédentes,
**caractérisé par le fait que** le nombre (M) des segments temporels (ZS) d'un bloc temporel de commande (ZB) correspond au maximum au nombre (M) des segments temporels (ZS) d'un bloc temporel de données (DB).

7. Support de données mobile pour l'échange sans contact de paquets de données (DP) avec un appareil d'écriture / lecture (SL), le support de données mobile comportant un dispositif de codage (KE1) pour la mise en oeuvre du procédé selon l'une des revendications précédentes.

8. Appareil d'écriture / lecture pour l'échange sans contact de paquets de données (DP) avec un support de données mobile (DT), l'appareil d'écriture / lecture comportant un dispositif de codage (KE2) pour la mise en oeuvre du procédé selon l'une des revendications 1 à 6.

9. Système d'identification avec un appareil d'écriture / lecture (SL) selon la revendication 8 et avec au moins un support de données mobile (DT) selon la revendication 7 qui échangent des paquets de données (DP) par l'intermédiaire d'une voie de transmission de données (LS) sans contact.
